Europäisches Patentamt

European Patent Office

Office européen des brevets

(11) Publication number: **0 067 483**
**B1**

# EUROPEAN PATENT SPECIFICATION

(45) Date of publication of patent specification: **25.09.85**

(21) Application number: **82200704.3**

(22) Date of filing: **08.06.82**

(51) Int. Cl.⁴: **B 60 P 1/38,** B 60 P 1/00,
B 65 D 88/62

(54) **Method for unloading bulk freight from a cargo body or container as well as cargo body or container for carrying out the method.**

(30) Priority: **12.06.81 NL 8102845**

(43) Date of publication of application:
**22.12.82 Bulletin 82/51**

(45) Publication of the grant of the patent:
**25.09.85 Bulletin 85/39**

(84) Designated Contracting States:
**AT BE CH DE FR IT LI LU NL SE**

(56) References cited:
**FR-A-2 351 881**
**GB-A- 527 916**
**US-A-3 443 703**
**US-A-3 868 042**

(73) Proprietor: **KONINKLIJKE EMBALLAGE
INDUSTRIE VAN LEER B.V.
P.O. Box 25
NL-1180 AA Amstelveen (NL)**

(72) Inventor: **Koudstaal, Willem
Dodaarslaan 87
NL-3645 JB Vinkeveen (NL)**

(74) Representative: **van der Beek, George Frans
et al
Nederlandsch Octrooibureau Johan de Wittlaan
15 P.O. Box 29720
NL-2502 LS 's-Gravenhage (NL)**

## Description

The invention relates to a method for loading and unloading bulk freight from a cargo body, container or other storage space, said space having side walls, end walls, a bottom and an unloading edge of the bottom in which prior to loading said space at least over the bottom and a portion of the wall opposite the said unloading edge, a foil is provided which foil is pulled outwards over the unloading edge for unloading the cargo.

Such a method is known from US—A—3 443 703. According to said known method a straight belt or foil is laid down over the bottom of the cargo space and extends upwardly along the wall opposite the unloading edge. At the unloading edge a roller is provided with means for winding up the belt or foil and if this is done the belt or foil is pulled out of the cargo space and unloads the cargo.

According to said method, however, the entire contents of the cargo space has to be moved at once and since the cargo presses the belt or foil upon the bottom of the space over its entire straight surface area the friction upon moving the cargo will be great.

Purpose of the invention is to provide a method by means of which it is possible to remove the bulk freight from the cargo body or container in a quick and efficient way and with a small amount of energy.

According to the invention this is achieved in that said foil is laid down over the bottom of said space in a sequence of overlapping folds such that the number and/or length of the folds per running meter increase the unloading edge towards the opposite wall. Due to the fact that the number and/or length of the folds increase the larger the distance becomes with respect to the unloading edge, each subsequent quantity of cargo that has to be moved towards the unloading edge is decreased. In unfolding the material of each fold slides upon itself.

It is observed that from GB—A—527 916 a method for unloading a vehicle is known in which prior to loading cross members are placed upon the bottom of the cargo space at regular distances from each other which cross members are interconnected by chains, the arrangement being such that the chains between the first and second cross member are straight whereas the chains between sbusequent cross members are folded and all have a length which is twice the length of the said straight chains. According to said known method the cargo can be discharged in separate quantities which, however, all have to be shifted over the bottom of the cargo space. The portions are almost identical in size and if during unloading the first portion starts by pulling out the first and second cross member, the next portion starts to move into the increasing space between the second cross member and the next one, whilst during unloading of said second portion the third one starts to move as well.

For granual material having a particle size smaller than the cross section of the cross members this method cannot be used at all because the cross members would be pulled through the mass of granular material with only a small amount being discharged over the unloading edge.

If the distance between the unloading edge and the opposite wall is large and with certain types of bulk freight it may be necessary that the foil extends up to the upper edge of the said opposite wall and eventually further along the roof as far as an edge above the unloading edge. In this way all cargo can be completely discharged after the greatest part already has been unloaded by unfolding the said foil.

When unloading takes place over a short distance, e.g. over a longitudinally extending long side edge of the bottom, then usually it suffices to have a foil extending maximally up to the upper edge of the side wall opposite of the unloading edge, no foil being necessary against the upper wall. From US—A 3 443 703 a cargo body or container is known which adjacent to the unloading edge has been provided with one or more rollers which can be driven and by means of which the foil can be moved.

According to the invention said rollers are mounted in a support which is removably placed in the cargo body or container below a screen having an inclined slide surface which faces the contents of the cargo body or container. By the use of this support with the foil having its starting and connecting to the rollers the cargo is completely enclosed by the foil when the support is placed inside the cargo body or container. The slide surface of the screen protects the support and makes sure that bulk freight present at the top of the slide surface is discharged as well.

Preferably said support is made such that the rollers are located in the support below a curved guiding surface for the foil and that the support has storage space for the foil beneath the rollers.

The invention now will be explained with reference to the drawings.

Fig. 1 shows in a perspective view a vehicle having a cargo body with a removed side wall.

Fig. 2 is a longitudinal section through the cargo body in closed condition.

Fig. 3 shows the cargo body according to the invention during unloading.

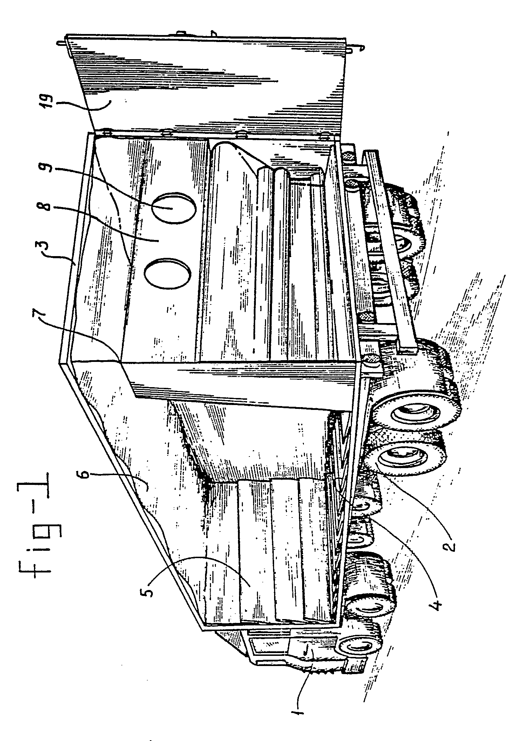

Fig. 1 illustrates a truck 1 with trailer 2 on which a container 3 is positioned. On the bottom of the container a foil 4 is laid down, which extends upwards along the front wall at 5, as well as along the roof at 6 and meets at 7 a screen 8 to be described in detail and provided with filling aperture 9.

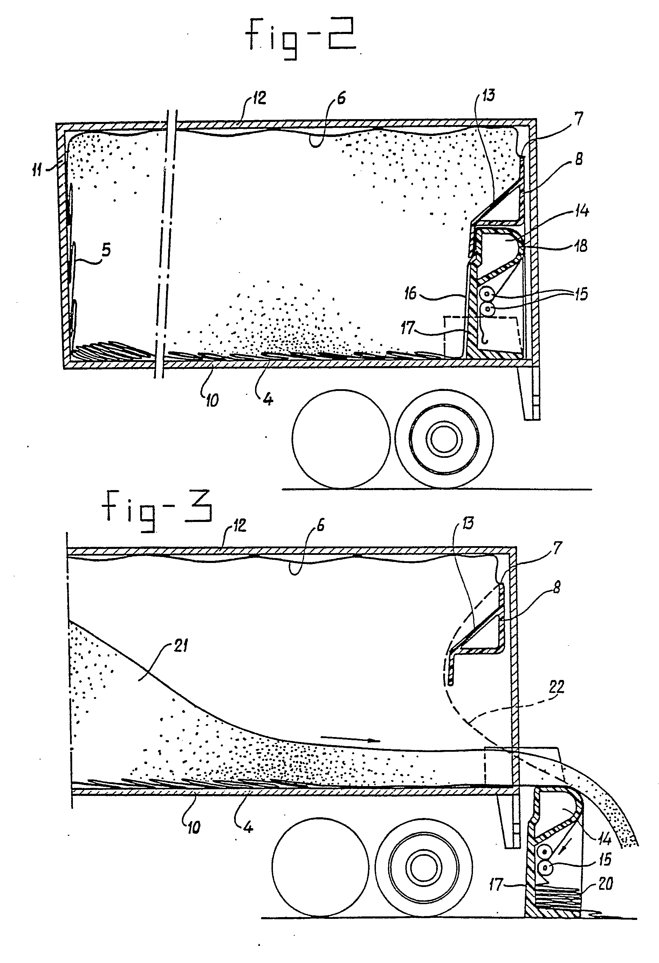

As it appears more clearly from Fig. 2 the foil 4 is laid down on the bottom 10 of the cargo body into a high number of folds extending upwards at 5 along the front wall 11, while at 6 the foil engages the roof 12 of the cargo body. The folds overlap each other such that always the upper portion of a fold is pulled away over the underlying portion so that unfolding is decelerated as little as possible. This would be the case when one should pull a fold portion lying beneath and especially when said portion lies beneath a fold portion loaded by the cargo.

Said foil can be maintained in its position against the front wall 11 and roof 12 by means adapted thereto, such as self-adhesive glues, tangle tape, press-studs etc., i.e. means adapted to carry the weight of the foil but being able to be pulled loose easily.

At 7 the end of the foil is fixed to a screen 8 in the form of a cross-beam having an inclined guiding surface 13. Below said screen 8, 13 a support 14 is located having two rollers 15 which can be driven. The foil extends, as indicated at 16, upwards along the front wall 17 of the support and over the curved guiding surface 18 towards the rollers 15. Thereby, the cargo is enclosed completely by the foil as well as by the screen 8, 13.

Fig. 3 shows the situation during unloading. After opening the doors 19 shown in Fig. 1 the support 14 is removed from the container and said support is placed on the ground.

Thereby the unloading aperture is opened and some bulk freight flows outwards.

When the rollers 15 are driven the foil material below the cargo is pulled outwards and carries along the cargo as indicated in Fig. 3. During this operation, the foil is stored in the support as indicated at 20.

By the line 21 the slope is indicated as may be formed during unloading.

When the foil is pulled completely taut over the bottom 16, the portion 5 (Fig. 2) will be unfolded and after this has happened the foil will be pulled from the roof 12 until a condition is attained as approximately indicated by the interrupted line 22. Then, the cargo is completely removed from the container. In many cases, however, it will be sufficient that the foil 4 extends over bottom 10 and only a portion of the front wall 11.

It will be clear that the invention can also be used with a cargo body open at the top even with a foil covering the cargo at the upper side and it will also be clear that the principle of unloading with the unfolding foil can be used when the upper side of the cargo is not covered with a foil respectively no foil is provided against the under side of the roof, but the foil is only located on the bottom and against the wall 11 opposite the unloading edge.

In the method according to the invention the foil for unloading the cargo may as shown lie directly on the bottom respectively against a side wall respectively the roof of the cargo body or container. However, said foil may also be provided when the walls and the bottom of the cargo body or container have already been covered respectively are covered with a covering foil, for example in the way as disclosed in the U.S. patent 3,868,042.

Of course, the foil should be sufficiently strong for accommodating the tensile load during unloading. Such a foil may consist of materials suitable for that purpose, such as plastic, webs of textile material and the like.

## Claims

1. Method for loading and unloading bulk freight from a cargo body, container (3) or other storage space, said space having side walls, end walls (11), a bottom (10) and an unloading edge of the bottom, in which prior to loading said space at least over the bottom and a portion of the wall opposite the said unloading edge, a foil (4) is provided which foil is pulled outward over the unloading edge for unloading the cargo, characterized in that said foil is laid down over the bottom of said space in a sequence of overlapping folds such that the number and/or length of the folds per running meter increase from the unloading edge towards the opposite wall.

2. Method according to claim 1, characterized in that the foil (4) is exptended from the upper edge of the wall (11) opposite of the unloading edge along the roof (12) as far as the edge above the unloading edge.

3. Cargo body or container (3) suitable for carrying out the method according to claim 1 or 2, said cargo body or container adjacent to the unloading edge being provided with one or more rollers (15) which can be driven and by means of which the foil (4) can be moved, characterized in that the rollers are mounted in a support (14) which is removably placed in the cargo body or container below a screen (8) having a inclined slide surface which faces the contents of the cargo body or container.

4. Cargo body or container according to claim 3, characterized in that the rollers (15) are located in the support (14) below a curved upper guiding surface (13) for the foil (4) and that the support has storage space (20) for the foil beneath the rollers.

5. Foil web provided with subsequent folds for carrying out the method according to claim 1.

6. Flexible internal bag for the internal cover of the walls of a cargo body or container, said bag being provided in its interior with the foil web according to claim 5.

## Revendications

1. Procédé de chargement et de déchargement de frêt en vrac dans un compartiment de chargement, conteneur (3) au autre volume d'emmagasinage, ledit volume présentant des parois latérales, des parois d'extrémité (11) un fond (10) et un bord de déchargement sur le fond, dans lequel avant de charger ledit volume on dispose une feuille (4) au moins sur le fond et sur une partie de la paroi opposée audit bord de déchargement, feuille que l'on tire vers l'extérieur par-dessus le bord de déchargement pour décharger la marchandise, caractérisé en ce qu'on pose ladite feuille sur le fond dudit volume en une succession de plis chevauchants telle que le nombre et/ou la longueur des plis par mètre couvert augmente du bord de déchargement vers la paroi opposée.

2. Procédé selon la revendication 1, caractérisé en ce que la feuille (4) est prolongée à partir du bord supérieur de la paroi (11) opposée au bord de déchargement le long du toit (12) jusqu'au bord situé au-dessus du bord de déchargement.

3. Compartiment de chargement ou conteneur (3) convenant pour la mise en oeuvre du procédé selon l'une des revendications 1 ou 2, ledit compartiment de chargement ou conteneur étant muni près de son bord de déchargement d'un ou plusieurs rouleaux (15) qui peuvent être entraînês et au moyen desquels la feuille (4) peut être déplacée, caractérisé en ce que les rouleaux sont montés dans un support (14) qui est placé de manière amovible dans le compartiment de chargement ou dans le conteneur au-dessous d'un écran (8) présentant une surface de glissement inclinée qui fait face au contenu du compartiment de chargement ou du conteneur.

4. Compartiment de chargement ou conteneur selon la revendication 3, caractérisé en ce que les rouleaux (15) sont situés dans le support (14) au-dessous d'une surface supérieure courbe (13) de guidage de la feuille (4) et que le support présente un volume (20) d'emmagasinage de la feuille au-dessous des rouleaux.

5. Feuille présentant des plis successifs pour la mise en oeuvre du procédé selon la revendication 1.

6. Sac interne souple pour le recouvrement interne des parois d'un compartiment de chargement ou d'un conteneur, ledit sac étant muni intérieurement d'une feuille selon la revendication 5.

**Patantansprüche**

1. Verfahren zum Beladen und Entladen von Massenfrachtgut aus einem Frachtkörper, Behälter (3) oder anderem Lagerraum, welcher Raum Seitenwände, Endwände (11), eine Boden (10) und am Boden eine Entladekante hat in welchem Raum vor der Beladung wenigstens über den Boden und einen Teil der Wand welcher sich gegenüber der genannten Entladekant befindet, eine Folie (4) angeordnet wird, welche Folie zum Entladen des Ladegutes über die Entladekante nach aussen gezogen wird, dadurch gekennzeichnet, dass die genannte Folie über dem Boden des genannten Raumes in einer Folge von sich derart überlappenden Falten verlegt worden ist, dass die Nummer und/oder Länge der Falten pro laufenden Meter von der Entladekante in Richtung des gegenüberliegenden Wandes zunimmt.

2. Verfahren nach Anspruch 1, dadurch gekennzeichnet, dass die Folie (4) sich von der oberen Kante der gegenüber der Entladekante vorhandenen Wand (11) entlang dem Dach (12) verläuft bis zur Kante welche sich oberhalb der Entladekante befindet.

3. Frachtkörper oder Behälter (3) geeignet für die Durchführung des Verfahrens nach Anspruch 1 oder 2 welcher Frachtkörper oder Behälter in der Nähe der Entladekante mit einem oder mehreren Rollen (15) versehen ist welche angetrieben werden können und mit deren Hilfe die Folie (4) bewegt werden kann, dadurch gekennzeichnet, dass die Rollen in einem Gestell (14) angeordnet sind welches wegnehmbar im Frachtkörper oder Behälter unterhalb eines Schirmes angeordnet ist, welches eine geneigte Rutschfläche besitzt welche dem Inhalt des Frachtkörpers oder Behälters zugewandt ist.

4. Frachtkörper oder Behälter nach Anspruch 3, dadurch gekennzeichnet, dass die Rollen (15) im Gestell (14) unterhalb einer gekrümmten oberen Führungsfläche (13) für die Folie (4) angeordnet sind und dass das Gestell unterhalb der Rollen Lagerraum (20) für die Folie besitzt.

5. Folie versehen mit auf einander folgenden Falten zur Durchführung des Verfahrens nach Anspruch 1.

6. Biegsamer innerer Beutel für die innere Bekleidung der Wände eines Frachtkörpers oder Behälters, welcher Beutel im Innern mit der gefalteten Folie nach Anspruch 5 versehen ist.

fig-1

# Fig-2

# Fig-3